# EUROPÄISCHE PATENTSCHRIFT

(11) **EP 1 418 112 B1**
(45) Veröffentlichungstag und Bekanntmachung des Hinweises auf die Patenterteilung: **11.02.2009**
(21) Anmeldenummer: 03023978.4
(22) Anmeldetag: 20.12.2001
(51) Int. Cl.: B62D 1/187

(54) **Lenksäulenanordnung**
Steering column assembly
Ensemble de colonne de direction

(30) Priorität: 06.02.2001 DE 20101928 U; 30.03.2001 DE 1001216
(43) Veröffentlichungstag der Anmeldung: 12.05.2004
(62) Teilanmeldung aus: 01985801.8
(73) Patentinhaber: ThyssenKrupp Presta AG, 9492 Eschen (LI)
(72) Erfinder: Müller, Olaf, 65428 Rüsselsheim (DE)
(74) Vertreter: Lindner, Manfred Klaus

(56) Entgegenhaltungen:
- EP-A- 0 019 571
- EP-A- 0 865 980
- EP-A- 0 941 909
- GB-A- 2 306 629
- US-A- 4 507 982
- US-A- 5 477 744
- US-A- 6 095 012

## Beschreibung

Die Erfindung betrifft allgemein eine Lcnksäulenanordnung für ein Fahrzeug gemäß dem Oberbegriff des Anspruchs 1. Derartige L,enksäulcnanordnungen sind Sicherheitseinrichtungen und dienen allgemein dazu, um Verletzungsgefahren und Verletzungen von Fahrern zu verringern.

Zur Positionsverstellung einer Lenksäule oder allgemein Lenksäulenanordnung in Höhen- und Längsrichtung ist es in der Praxis technisch üblich, dass seitlich neben der Lenksäule Klemmbleche mit Verstellschlitzen in horizontaler und vertikaler Richtung angebracht sind. Durch diese Klemmschlitze ist üblicherweise ein gerader Klemmbolzen gesteckt, der mittels Verstellhebel(n) und Klemmnocken zur Verkürzung seiner Länge die Klemmbleche derart zueinander klemmt, dass sie selbst bei einem Crash für ausreichenden Halt der Lenksäule sorgen. Diese Verstellbleche mit dem Klemmbolzen und seiner Klemmmechanik stehen beim aus der Praxis bekannten Stand der Technik derart nach unten über das Lenkrohr über, dass diese Teile zum gefährlichen "Knieverletzer" bei einem Crash werden können. Es ist auch nicht möglich, diese Mechanik umgedreht nach "oben" zu legen, da sich dort üblicherweise das Tachometer und die anderen Instrumente befinden.

Bei weiteren aus der Praxis bekannten positionseinstellbaren Lenksäulenanordnungen bestehen mechanische Lenksäulenlängs- und -höhenverstellungen üblicherweise aus Plattenpaketen, die mittels Klemmbolzen verbunden und in Schlitzen geführt sind. Die Plattenpakete bestehen üblicherweise aus zwei unterschiedlichen Plattenarten. Eine Plattenart hat Schlitze zur Längsverschiebung der Lenksäule. Diese sind an dem Lenksäulengehäuse befestigt. Die zweite Plattenart hat senkrecht dazu verlaufende Schlitze. Diese Platten sind an einer Basisplatte starr befestigt, die wiederum am Fahrzeug angeschraubt ist. Innerhalb der Länge der Schlitze ist jede Stellung der Lenksäule möglich. An dem zentralen Bolzen ist üblicherweise eine Klemmvorrichtung montiert, die über Gewinde oder Nocken die Plattenpakete ent- bzw. verspannt. Die Platten können auch schwenkbare Leisten sein, wie z.B. gemäß der PCT WO 97/16337.

Bei Lenksäulenanordnungen ist grundsätzlich aus Sicherheitsgründen vor allem der darunter befindliche Freiraum wesentlich, da die Beine des Fahrers im Fall eines Frontalaufpralls oder ähnlich wirkenden Unfällen durch die Verformung der Umgebung dieses Freiraumes gefährdet sind. Eine besondere Gefahr geht von der Lenksäulenanordnung selbst aus, wenn diese in den Freiraum hinein verformt wird. Aber auch die unverformte Lenksäulenanordnung selbst stellt im Fall solcher Unfälle ein Verletzungsrisiko dar. In besonderer Weise sind hierfür Längsverstelleinrichtungen und Höhenverstelleinrichtungen verantwortlich, die einerseits für eine recht tiefe Lage der Lenksäulenanordnung verantwortlich sind und andererseits über die Kontur der Lenksäulenanordnung vorstehen. Aus der US 5,477,744 A, die dem Oberbegriff des Anspruchs 1 entspricht, sind derart voluminös bauende Lenksäulenanordnungen mit Längsverstelleinrichtungen und Höhenverstelleinrichtungen bekannt, wobei die Längsverstelleinrichtungen eine Schlitzführung, die in der Längsrichtung der Lenksäulenanordnung verläuft, und darin geführte Eingriffseinrichtungen enthaltcn und wobei die Höhenverstelleinrichtungen Schwenkeinrichtungen enthalten, die an den Eingriffseinrichtungen der Längsverstelleinrichtungen angreifen.

Allen Mechaniken des Standes der Technik haftet somit das Problem an, dass sie einige Zentimeter in den unter der Lenksäulenanordnung befindliche Freiraum für die Beine des Fahrers über das Lenksäulengehäuse hinausragen, einfach deshalb, weil die Verstelllängen der Längsverstelleinrichtungen und Höhenverstelleinrichtungen dies erfordert. Diese Überstände sind bei einem Crash oder Unfall ein bedeutendes Versetzungsrisiko.

Es gilt daher den bestehenden Schutz für einen Fahrer bei einem Unfall durch die Gestaltung der Lenksäulenanordnung zu verbessern. Insbesondere soll mit der Lenksäulenanordnung der Beinbereich eines Fahrers bei einem Unfall weitergehend geschützt werden.

Dieses Ziel wird mit einer Lenksäulenanordnung nach dem neuen Anspruch 1 erreicht. Vorteilhafte und bevorzugte Weiterbildungen dieser Lenksäulenanordnung sind in den abhängtgen neuen Ansprüchen 2 bis 23 angegeben.

Bei der Lenksäulenanordnung mit Längsverstelleinrichtungen und Höhenverstelleinrichtungen dafür, wobei die Längsverstelleinrichtungen eine Schlitzführung, die linear in der Längsrichtung der Lenksäulenanordnung verläuft, und darin geführte Eingriffseinrichtungen enthält, wobei die Höhenverstelleinrichtungen Schwenkeinrichtungen enthalten, die an den Eingriffseinrichtungen der Längsverstelleinrichtungen angreifen, und wobei die Schlitzführung beiderseits der Lenksäulenanordnung linear in der Längsrichtung der letzteren verlaufende Führungsschlitze enthält, und die darin geführten Eingriffseinrichtungen durch ein nur auf eincr Seite der Lenksäulenanordnung liegendes Eingriffsteil gebildet sind, ist erfindungsgemäß vorgesehen, dass das Eingriffsteil einen an die Außenkontur der Lenksäulenanordnung angepassten Mittenabschnitt und Eingriffsenden aufweist, die neben der Lenksäulenanordnung liegen.

Vorzugsweise enthalten die Schwenkeinrichtungen wenigstens einen Schwenkhebel, der mit einem Ende an den Eingriffseinrichtungen der Längsverstelleinrichtungen angreift und mit seinem anderen Ende am Fahrzeug, insbesondere einer Basisplatte, die mit dem Fahrzeug verbunden ist, schwenkbar angelenkt ist.

Alternativ oder zusätzlich kann vorgesehen sein, dass die Schwenkeinrichtungen eine Stabilisierung enthalten. Vorzugsweise weisen die Stabilisierung wenigstens einen Führungshebel auf, der mit einem Ende an den Eingriffseinrichtungen der Längsverstelleinrichtungen angreift und mit seinem anderen Ende am Fahrzeug, insbesondere einer Basisplatte, die mit dem Fahrzeug verbunden ist, schwenkbar angelenkt ist, und enthält jeder Führungshebel und/oder ggf. jeder Schwenkhebel einen Längenausgleich.

Bevorzugt sind zum Fixieren einer Einstellposition der Lenksäulenanordnung Klemmeinrichtungen vorgesehen, die an den Eingriffseinrichtungen der Längsverstelleinrichtungen angreifen. Mit Vorteil enthalten die Klemmeinrichtungen eine Mehrzahl von Klemmplatten, die über die Eingriffseinrichtungen der Längsverstelleinrichtungen betätigbar sind, da damit eine besonders hohe Klemmkraft erzeugt werden kann. In Kombination mit jeweils einer Mehrzahl von Schwenkhebeln und/oder einer Mehrzahl von Führungshebeln sind die jeweiligen Hebel an ihren entsprechenden Enden zwischen den Klemmplatten aufgenommen, so dass bei einem Verklemmen einer Einstellposition der Lenksäulenanordnung mittels der Klemmplatten über die Eingriffseinrichtungen der Längsverstelleinrichtungen sowohl letztere als auch die Schwenkhebel und ggf. Führungshebel und somit die Höhenverstelleinrichtungen fixiert werden. Weiterhin ist es bevorzugt, wenn die Klemmeinrichtungen Halteeinrichtungen enthalten, die bezüglich der Eingriffseinrichtungen zum Betätigen der Klemmeinrichtungen betätigbar sind, wobei die Halteeinrichtungen insbesondere Schrauben, Schraubgewinde, Muttern, Hebel und/oder Nocken enthalten. Weiterhin ist es möglich, dass die Klemmeinrichtungen eine Mehrzahl von Klemmplatten und wenigstens ein diesen zugeordnetes Klemmstück enthalten, das derart ausgeführt ist, dass es zum Erzielen einer Klemmwirkung eine Überdeckung mit den Klemmplatten sowie ggf. Schwenkhebeln und/oder Führungshebeln hat. Dabei ist es bevorzugt, wenn das Klemmstück in einem leichten Bogen von vorzugsweise wenigen hundertstel Millimetern derart ausgeführt ist, dass damit an Enden oder Endbereichen die größte Klemmkraft ausübbar ist.

Mit Vorzug kann gemäß der Erfindung bei der Lenksäulenanordnung ferner vorgesehen sein, dass die Eingriffseinrichtungen bezüglich der Lage der Lenksäulenanordnung in dem Fahrzeug nicht über die Lenksäulenanordnung nach unten vorstehen und insbesondere oberhalb der Lenksäulenanordnung um diese herum geführt sind, wobei die Eingriffseinrichtungen insbesondere maximal um die obere Hälfte der Lenksäulenanordnung herum geführt sind. In Verbindung mit den weiter oben erläuterten Klemmeinrichtungen ist es ferner bevorzugt, wenn die Eingriffseinrichtungen zum Betätigen der Klemmeinrichnmgen schwenkbar sind. Im Rahmen der Erfindung ist dabei ferner mit Vorzug vorgesehen, dass die Eingriffseinrichtungen maximal um ca. 60 °, insbesondere um ca. 45 ° und vorzugsweise um ca. 30 °, besonders bevorzugt um ca. die Hälfte jeder vorstehenden Angabe aus einer Mittelstellung in beide Richtungen, verschwenkbar sind. Eine besonders bevorzugte Ausgestaltung dieses Aspekts der Erfindung besteht darin, dass das Eingriffsteil durch einen Bolzen gebildet ist, der Abkröpfungen enthält, mittels denen er um die Lenksäulenanordnung herum geführt ist, wobei der Bolzen insbesondere einen kreisartigen Querschnitt hat.

Es ist bei der Erfindung ferner vorteilhaft, wenn sich die Längsverstelleinrichtungen bei einer Höhenverstellting der Lenksäulenanordnung mitbewegen.

Im Rahmen der Erfindung ist weiterhin insbesondere vorgesehen, dass sich die Längsverstelleinrichtungen und Höhenverstelleinrichtungen einseitig oder insbesondere beidseitig seitlich neben der Lenksäulenanordnung befinden.

Ferner ist es bevorzugt, dass die Schlitzführung der Längsverstelleinrichtungen wenigstens einen Führungsschlitz aufweist, der in einer Verstellplatte ausgebildet ist.

Für den Bedienungskomfort ist es von besonderem Vorteil, wenn Gewichtsentlastungseinrichtungen so angeordnet sind, dass das Gewicht der Lenksäulenanordnung zumindest teilweise kompensiert wird. Vorzugsweise enthalten die Gewichtsentlastungseinrichtungen eine Wickelfeder, die zwischen dem Fahrzeug und der Lenksaulenanordnung wirkt. Bevorzugt ist dies dadurch realisiert, dass die Wickelfeder an einerseits den Schwenkeinrichtungen und andererseits einer Basisplatte wirksam angeordnet ist, an der die Schwenkeinrichtungen angreifen.

Die Erfindung wird nachfolgend anhand exemplarischer Ausführungsbeispiele unter Bezugnahme auf die Zeichnung näher erläutert, in der:
- Fig. 1: ein erstes Ausführungsbeispiel der Lenksäulenanordnung in einer schematischen Querschnittsansicht in zwei Höheneinstellpositionen zeigt,
- Fig. 2: eine schematische Ansicht eines Abschnittes der Lenksäulenanordnung mit einer Sicherheitseinrichtung des erstes Ausführungsbeispiels gemäß dem Schnitt "C" in der Fig. 1 zeigt,
- Fig. 3: eine schematischen Ansicht eines Abschnittes der Lenksäulenanordnung mit der Sicherheitseinrichtung des erstes Ausführungsbeispiels zur Verdeutlichung einer Klemmbetätigung gemäß dem Schnitt "D" in der Fig. 1 zeigt,
- Fig. 4: eine schematische Ansicht eines Abschnittes der Lenksäulenanordnung mit der Sicherheitseinrichtung des erstes Ausführungsbeispiels in zwei Höheneinstellpositionen, jedoch von jeweils einer anderen Seite, gemäß dem Schnitt "B" in der Fig. 1 zeigt,
- Fig. 5: eine schematische Seitenansicht eines Abschnittes der Lenksäulenanordnung mit der Sicherheitseinrichtung des erstes Ausführungsbeispiels in zwei Höheneinstellpositionen mit einer Variante bei den Klemmeinrichtungen zeigt,
- Fig. 6: eine teilweise geschnittene schematische Seitenansicht eines zweiten Ausführungsbeispiels der Lenksäulenanordnung mit einer Sicherheitseinrichtung in einer oberen Position zeigt,
- Fig. 7: eine teilweise geschnittene schematische Seitenansicht des zweiten Ausführungsbeispiels der Lenksäulenanordnung mit der Sicherheitseinrichtung in einer unteren Position zeigt,
- Fig. 8 bis 11: schematische Querschnittsansichten gemäß den Schnittangaben in den Fig. 6 und 7 zeigen,
- Fig. 12: eine Ansicht analog zur Fig. 6 einer Variante des zweiten Ausführungsbeispiels der Lenksäulenanordnung mit der Sicherheitseinrichtung in einer oberen Position zeigt, und
- Fig. 13: eine Ansicht analog zur Fig. 7 einer Variante des zweiten Ausführungsbeispiels der Lenksäulenanordnung mit der Sicherheitseinrichtung in einer unteren Position zeigt.

Gleiche Bezugszeichen in den einzelnen Figuren und Abbildungen der Zeichnungen bezeichncn gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Die Erfindung wird nachfolgend anhand von in den Zeichnungen dargestellten Ausführungsbeispielen näher erläutert, ohne jedoch darauf beschränkt zu sein.

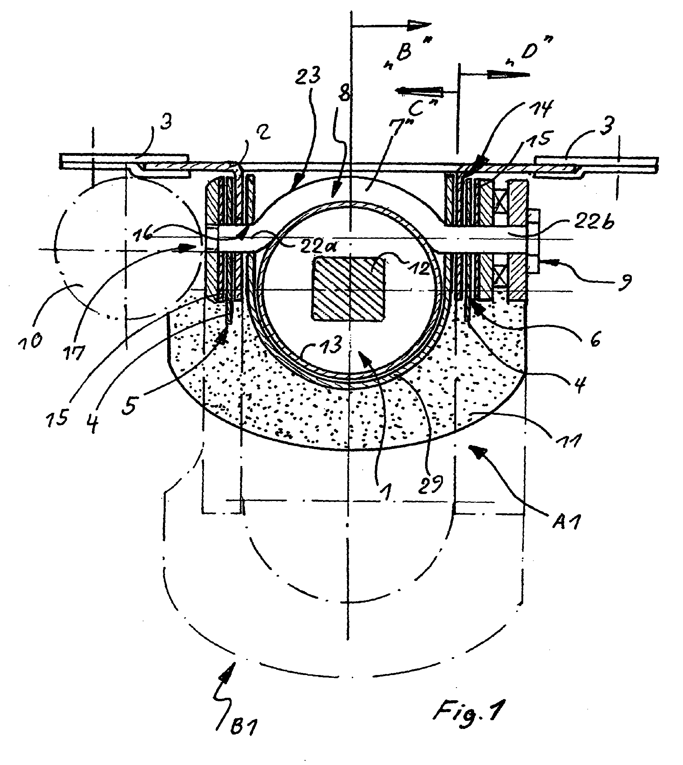

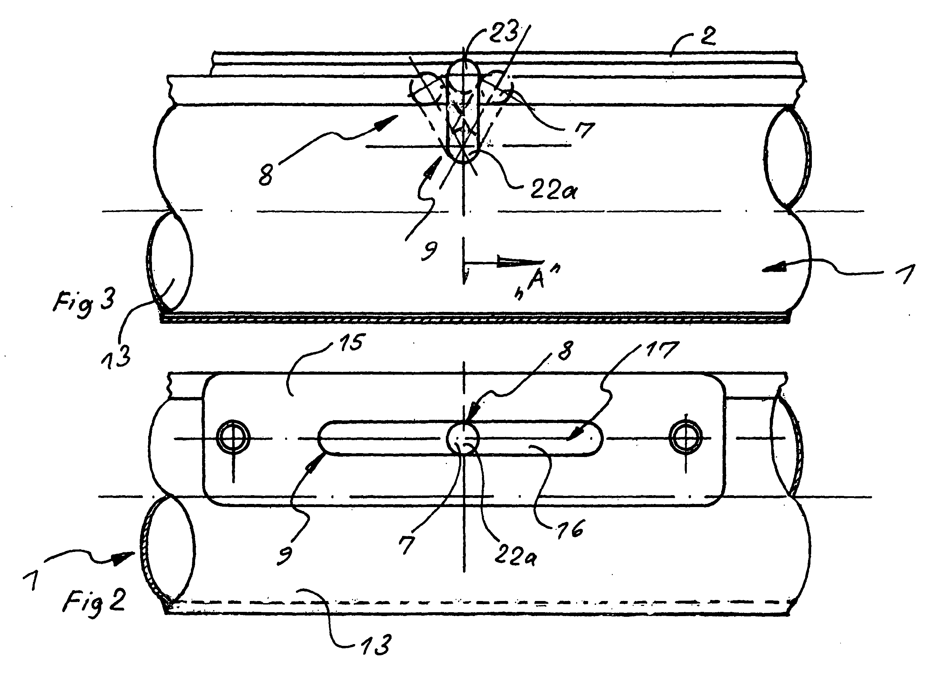

Die Fig. 1 und 2 zeigen im Querschnitt bzw. in einer Seitenansicht eine Lenksäulenanordnung 1 aufgehängt an einer Basisplatte 2, wie beispielsweise einem Gleitblech. Die Basisplatte 2 ist in an einer Karosserie (nicht gezeigt) eines Fahrzeuges (nicht gezeigt) angebundenen Führungen 3 gelagert. Seitlich der Lenksäulenanordnung 1 oder allgemein Lenkung befinden sich gelenkig gelagerte Schwenkhebel 4, die Bestandteil von Schwenkeinrichtungen 5 sind, die wiederum zu Höhenverstelleinrichtungen 6 gehören. Ein erfindungsgemäß der Lenkungskontur folgend geformter Bolzen als Eingriffsteil 7 ist durch seine Form Platz sparend und stellt Eingriffseinrichtungen 8 von Längsverstelleinrichtungen 9 dar.

In Der Fig. 1 ist ferner ein Raum 10 zur Aufnahme eines pyrotechnischen Verstellzylinders (nicht gezeigt) angedeutet, mittels dem im Falle eine Unfalls die Lenksäulenanordnung 1 von einem Fahrer weg bewegt werden kann und wie er in den früheren Anmeldungen DE 198 44 412.5 und PCT/DE 99/01000 der vorliegenden Anmelderin beschrieben ist. Mit 11 ist ein Aufprallpolster bezeichnet, das die Lenksäulenanordnung 1 zu den Beinen eines Fahrers hin abdeckt. Die Lenkwelle der Lenksäulenanordnung 1 ist mit 12 bezeichnet. Die Lenksäulenanordnung 1 enthält auch eine Lenksäule 13. In durchgezogenen Linien ist die Stellung der Lenksäulenanordnung 1 in einer oberen Position A1 und strichpunktiert die Stellung der Lenksäulenanordnung 1 in einer unteren Position B1 dargestellt.

Es sind ferner in der Fig. 1 Klemmeinrichtungen 14 dargestellt, die beiderseits der Lenksäulenanordnung 1 eine Mehrzahl von Klemmplatten 15 enthalten, die seitlich an der Lenksäulenanordnung 1 angeordnet sind und zwischen denen jeweils Schwenkhebel 4 mit ihren entsprechenden Endbereichen aufgenommen sind. Die Fig. 2 zeigt deutlich einen Führungsschlitz 16 einer Schlitzführung 17, die Bestandteil der Längsverstelleinrichtungen 9 ist.

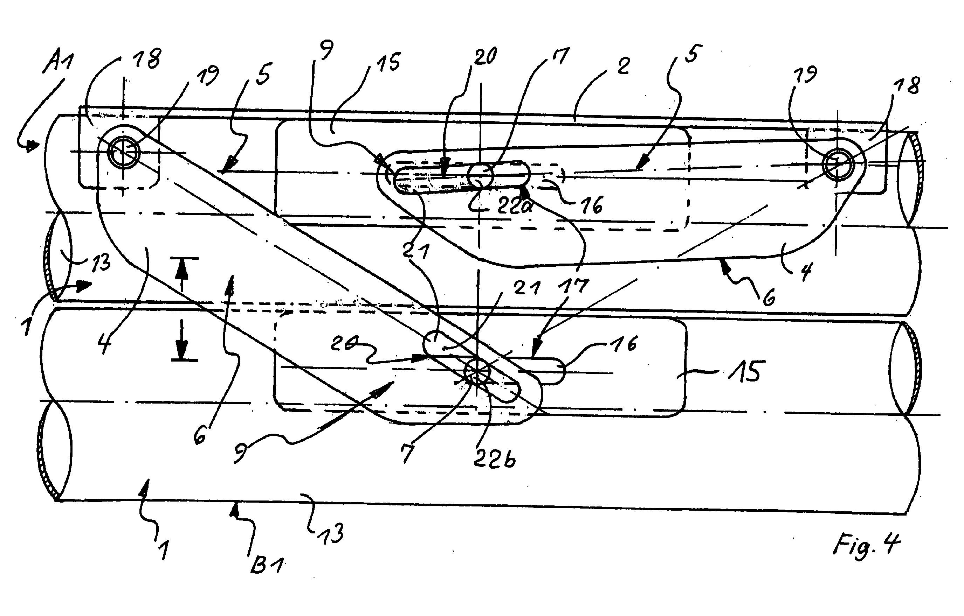

In der Fig. 3 ist schematisch gezeigt, wie sich der Bolzen 7 der Eingriffseinrichtung 8, statt dass er sich, wie es bei geraden Bolzen üblich ist, dreht, um ca. 30 ° oder 45 ° bis 60 ° schwenkt, um eine Betätigung der Klemmeinrichtungen 14 zu bewerkstelligen. Ferner ist in der Fig. 3 exemplarisch, da auch gültig für die Fig. 2 und 4, der Schnitt "A" eingezeichnet, um die Beziehung zur Ansicht in der Fig. 1 zu verdeutlichen.

Die Fig. 4 zeigt jeweils schematisch die obere Stellung A1 der Lenksäulenanordnung 1 von einer Seite und die untere Stellung B 1 der Lenksäulenanordnung 1 von der anderen Seite unter Verdeutlichung von Funktion und Anordnung der Schwenkhebel 4. Letztere sind schwenkbar an Lagerböcken 18 mittels Lagerbolzen 19 am Gleitblech oder an der Basisplatte 2 angebracht und werden an ihrer Überschneidung mit dem Klemmbolzen oder allgemein Bolzen 7 verspannt. Die Schwenkhebel 4, von denen auf jeder Seite der Lenksäulenanordnung 1 eine Mehrzahl vorgesehen sein kann und die der Höhenverstellung dienen, sowie die Klemmbleche oder -platten 15 für die vertikale oder Längsverstellung in ebenfalls auf jeder Seite möglicherweise mehrzahliger Anzahl sind wechselweise geschachtelt, so dass eine gute Klemmkraft selbst für einen ausreichenden Halt bei einem Crash entsteht. Weiterhin ist in jedem Schwenkhebel 4 ein Längenausgleich 20 in Form eines Langloches 21 gezeigt, in dem der jeweilige Endbereich 22a bzw. 22b des Bolzens 7 aufgenommen ist. Der Längenausgleich 20 ermöglicht beispielsweise auch eine geradlinige Führung der Lenksäulenanordnung 1 bei einer Höhenverstellung statt einer Führung längs eines Bogens, wie es der Fall wäre, wenn der Längenausgleich 20 nicht enthalten wäre, die Endbereiche 22a und 22b also in normalen Passlöchern (nicht gezeigt) in den entsprechenden Endbereichen der Schwenkhebel 4 aufgenommen wären. Letzteres ist jedoch auch als Bauform möglich.

In der Fig. 1 ist ferner gezeigt, dass der Bolzen 7 zwischen seinen beiden Endbereichen 22a und 22b einen Mittenabschnitt 23 aufweist, der bogenartig um den Querschnitt der Lenksäulenanordnung 1 an deren Oberseite herumgeführt ist. Der Bolzen 7 ist somit zwischen seinen beiden Endbereichen 22a und 22b sozusagen abgekröpft. Dadurch wird im Bereich der Endbereiche 22a und 22b des Bolzens 7 ausreichend Platz unterhalb der Basisplatte 2 geschaffen, um die Längsverstelleinrichtungen 9, die Höhenverstelleinrichtungen 6 und die Klemmeinrichtungen 14 unterzubringen, ohne dass hierfür eine spezielle Bauhöhe entsteht. Der Bolzen 7 oder genauer gesagt sein Mittenabschnitt 23 liegt dabei zwischen der Basisplatte 2 und der Lenksäulenanordnung 1, also oberhalb der letzteren bezogen auf das Fahrzeug (nicht gezeigt). Durch diese Form und Anordnung des Bolzens 7, der auch durch jegliches andere Teil mit ähnlicher Form ersetzt sein kann, solange es die dem Fachmann ohne weiteres verständliche Funktion erfüllt, einerseits und die Gestaltung der Verstelleinrichtungen andererseits, nämlich der Längsverstelleinrichtungen 9 mit der Schlitzführung 17 und getrennt davon der Höhenverstelleinrichtung 6 mit den Schwenkhebeln 4, kann in vorteilhafter Weise erreicht werden, dass keine nach unterhalb der Lenksäulenanordnung 1 vorstehenden und damit die Beine eines Fahrers gefährdende Teile dieser Verstelleinrichtungen vorkommen. Dennoch ist eine einwandfreie und gute Einstellbarkeit von Lage und Position der Lenksäulenanordnung 1 realisiert.

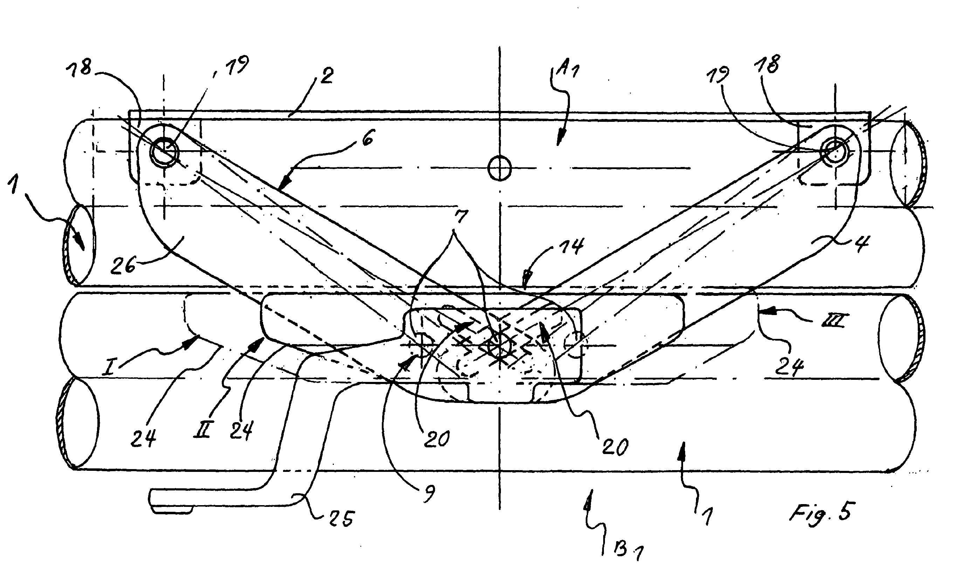

Die Fig. 5 zeigt ebenfalls die obere und untere Stellung A1 bzw. B1 der Lenksäulenanordnung 1 und zusätzlich ein Klemmstück 24 in vorderer, einer mittleren und hinterer horizontaler oder Längsposition I, II bzw. III. Das Klemmstück 24 ist wegen der Hebelverhältnisse und hierdurch eingeleiteter Kräfte möglichst lang. Ferner ist das Klemmstück 24 derart leicht gebogen, dass es vor allem an den Enden die Kraft überträgt (günstige Hebelverhältnisse). Weiter zeigt die Fig. 5 Höhenverstelleinrichtungen 6, Längsverstelleinrichtungen 9 sowie Klemmeinrichtungen 14 und für letztere einen Klemmhebel 25, mit dem beispielsweise ein weiter oben im Zusammenhang mit der Fig. 3 beschriebenes Verschwenken des Bolzens 7 realisiert werden kann, aber auch andere Halteeinrichtungen (nicht gezeigt) betätigt werden können, die wiederum einem Lösen und Verklemmen der Klemmeinrichtungen 14 dienen. Weitere Teile, Merkmale und Funktionen sind analog jenen, die im Zusammenhang mit anderen Figuren vorher beschrieben wurden, so dass hier auf eine bloße Wiederholung verzichtet wird.

Als weitere Besonderheit ist in der Fig. 5 ein Führungshebel 26 gezeigt, der, wie auch der Schwenkhebel 4 zu den Höhenverstelleinrichtungen 6 gehört und einer Stabilisierung der letzteren dient. Wie auch bezüglich des Schwenkhebels 4 bereits erläutert, kann auch jeweils eine Mehrzahl von Führungshebeln 26 auf jeder Seite der Lenksäulenanordnung 1 vorgesehen sein und in den jeweiligen Endbereichen abwechselnd mit den Klemmplatten 15 und den entsprechenden Endbereichen der Schwenkhebel 4 in den Klemmeinrichtungen 14 eingebunden sein. Bei dem hier gezeigten Ausführungsbeispiel weisen nicht nur die Schwenkhebel 4, sondern auch die Führungshebel 26 in den Endbereichen, die an den Bolzen 7 gekoppelt sind, jeweils einen Längenausgleich 20 auf, wodurch der Bewegungsweg bei der Höhenverstellung freier gestaltet werden kann.

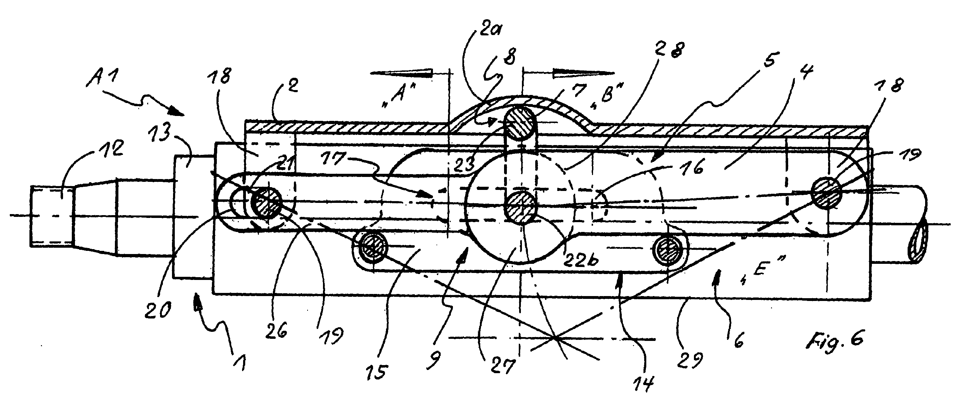

Die Fig. 6 zeigt schematisch dargestellt eine Lcnksäulenanordnung oder einen Lenksäulenzusammenbau 1 in ihrer/seiner obersten Stellung A1, positioniert parallel zu einer Basisplatte 2 zur Verdeutlichung einer weiteren Ausführungsmöglichkeit der erfindungsgemäßen Sicherheitseinrichtung. Soweit einzelne Merkmale, Bauteile und/oder Funktionen bereits im Zusammenhang mit den Fig. 1 bis 5 erläutert wurden, wird weitgehend auf eine nochmalige schriftliche Darstellung für die Fig. 6 und die weiteren Figuren verzichtet und auf die bereits erfolgte Beschreibung verwiesen. Weitere Einzelheiten ergeben sich insbesondere auch aus der vergleichenden Betrachtung der bereits erläuterten Figuren mit den nachfolgend behandelt ten Figuren, insbesondere unter Zuhilfenahme der Bezugszeichen.

An der Lenksäulenanordnung 1 in der Fig. 6 ist in dem betroffenen Fachmann bekannter Weise ein Paket Klemmbleche oder -platten 15 angebunden, die zu Klemmeinrichtungen 14 gehören. An der Basisplatte 2 sind an den vier Ecken zwei lenkungsseitige Lagerböcke 18 und zwei Lagerböcke 18 motorseitig angebracht. An jedem motorseitigen Lagerbock 18 sind Schwenkarme oder -hebel 4 an ihrem einen Ende mittels Lagerbolzen 19 angebolzt. Die Schwenkarme 4 enden am anderen Ende mit einer möglichst großen kreisförmigen Fläche 27, in deren Mitte die Endbereiche 22a, 22b des Bolzens 7 der Eingriffseinrichtungen 8 der Längsverstelleinrichtungen 9 durchgesteckt sind. Dieser Schwenkarm 4 kann um den Lagerbolzen 19 schwenken. Die Schwenkarme oder -hebel 4 haben also nur fixe Löcher zum Schwenken und keinen Längenausgleich 20, und zwar weder an den Lagerböcken 18, noch beim Bolzen 7. Wie bereits weiter oben erwähnt, kann auf jeder Seite der Lenksäulenanordnung 1 ein Paket von Schwenkhebeln 4 jeweils parallel vorgesehen sein, um die Stabilität zu erhöhen.

Gegenüber an dem lenkungsseitigen Lagerbock 18 sind ein Paket von Stütz- oder Führungshebeln 26 wieder mittels Lagerbolzen 19 an einem Ende angebolzt. Auch deren anderes Ende endet mit einer großen Kreisfläche 28, durch deren Mitte ebenfalls die Endbereiche 22a, 22b des Bolzens 7 der Eingriffseinrichtungen 8 der Längsverstelleinrichtungen 9 durchgesteckt sind. Der Stützarm oder -hebel 26 stabilisiert die Höhenein- oder -verstellmechanik oder -einrichtungen 6 zu einem Dreieck und weist im gezeigten Fall an seinem lagerbockseitigen Ende einen relativ kurzen Längenausgleich 20 auf, der aber auch am anderen Ende oder an beiden Enden vorgesehen sein könnte, oder alternativ oder zusätzlich in einem Ende oder in beiden Enden der Schwenkhebel 4 vorgesehen sein könnte.

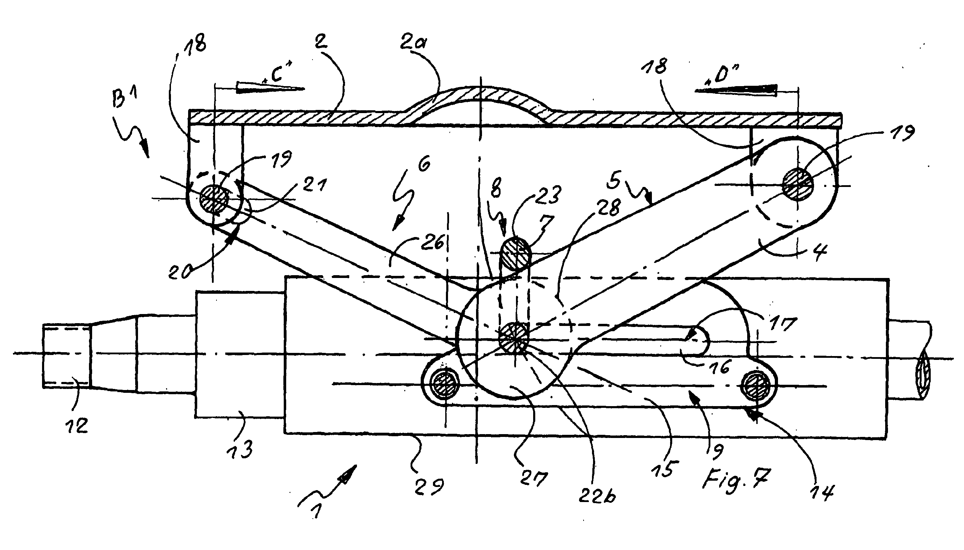

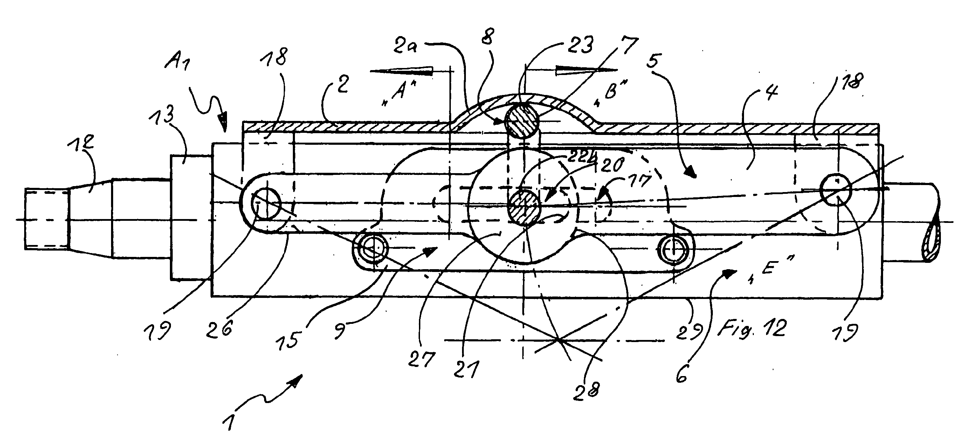

Die Fig. 6 und 7 zeigen den Längenausgleich 20 am Ende des Führungshebels 26 auf der Seite des Lagerbockes 18. Die Fig. 12 zeigt den Längenausgleich 20 am Ende des Führungshebels 26 auf der Seite der Klemmeinrichtungen 14 als eine weitere lediglich exemplarischeAusführungsvariante.

Die Schwenkhebel 4, Führungs- oder Stützhebel 26 und Klemmplatten oder -bleche 15 werden wechselseitig in der Anzahl beidseitig montiert, bis die nötige Klemmfestigkeit insbesondere auch für den Fall eines Crashs erreicht ist.

Die Fig. 7 zeigt die erfindungsgenläße Kinematik bei unterster Stellung B 1 der Lenksäulenanordnung 1 in Position vom Fahrer weg.

In den beiden Darstellungen der Fig. 6 und 7 ist deutlich eine Ausbuchtung 2a in der Basisplatte 2 dargestellt, welche Ausbuchtung 2a zur Aufnahme des Mittenabschnittes 23 des Bolzens 7 dient, um möglichst hoch oben bauen zu können und dadurch möglichst viel Fußraum in dem Fahrzeug (nicht gezeigt) unterhalb der Lenksäulenanordnung 1 trotz der ganzen Verstellmechaniken oder -einrichtungen zu erhalten.

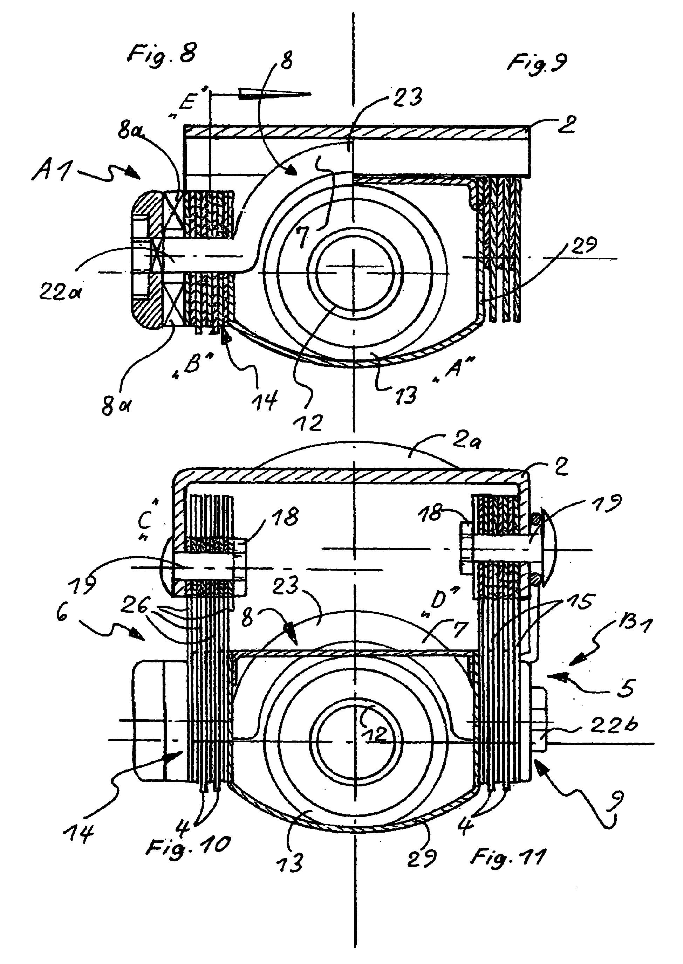

Die Fig. 8 zeigt im Schnitt "B" der Fig. 6 den Schnitt durch die Klemmplatten 15 der Klemmeinrichtungen 14 in seiner Mitte. Dargestellt sind auch die technisch bekannte Klemmnocken oder -rollen 8a, die Bestandteil der Klemmeinrichtungen 14 sind und deren Funktion dienen. Der Bolzen 7 ist Platz sparend abgekröpft, wie bereits vorher beschrieben und erklärt wurde, und mit seinem Mittenabschnitt 23 in der örtlichen Ausbeulung oder Ausbuchtung 27 in der Basisplatte aufgenommen, so dass durch die Wirkung beider baulichen Ausgestaltungen (abgekröpfter Bolzen und Ausbeulung zu dessen Aufnahme) besonders viel Raum gegenüber den heute in der Praxis üblichen geraden und unter der Lenksäulenanordnung 1 liegenden Klemmachsen geschaffen wird.

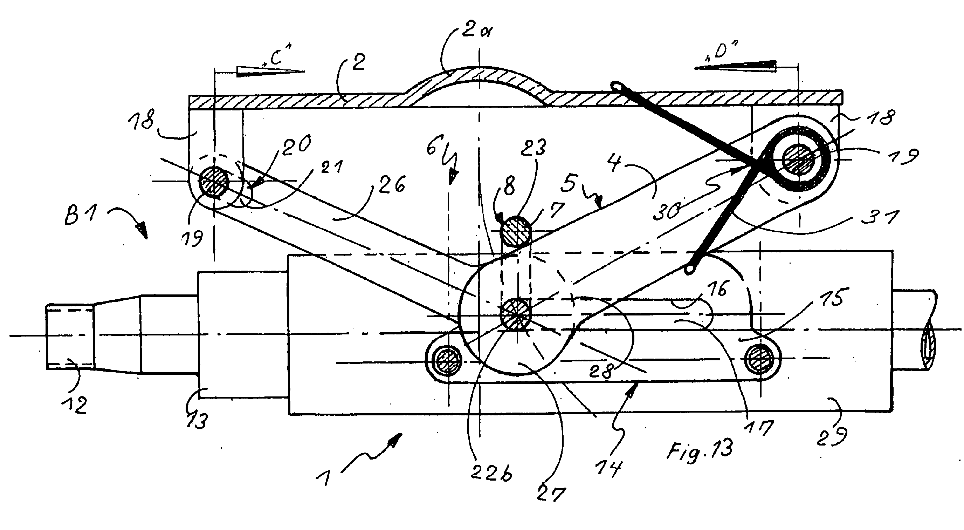

Die Fig. 9 zeigt einen Schnitt "A" in der der Fig. 6 durch die Lenksäulenanordnung 1 und deren Gehäuse 29. Die Fig. 10 zeigt im Schnitt "C" in der Fig. 7 die verstellbare Lenkung oder Lenksäulenanordnung 1 in unterster Stellung B1, geschnitten durch den lenkungsseitigen Lagerbock 18; die Fig. 11 zeigt den Schnitt "D" durch den motorseitigen Lagerbock 18 gemäß der Fig. 7. Die Fig. 13 zeigt als zusätzliche Gewichtsentlastungseinrichtungen 30 einePlatz sparende Wickelfeder 31, die parallel zum Schwenkarm oder -hebel 4 montiert ist.

Ein wesentlicher Vorteil der Erfindung ist, dass die Mechanik nie über dem Lenkungszusammenbau hervorsteht und damit keine Knie im Crash verletzt werden und sich auch mehr Knieraum ergibt. Dies wird erreicht durch mit der Höhenverstellung der Lenksäulenanordnung 1 auf- und abgehenden Schwenkarm oder -hebel 4. Auch der abgekröpfte Klemmbolzen 7 und die platzgünstig gestaltete Wickelfeder 31 tragen hierzu bei.

Weitere Vorteile und bevorzugte Ausgestaltungen der Erfindung sind:
1. Die gesamte Lenksäulenhöhen- und -längsverstellmechanik hat eine kompakte Bauweise, die unabhängig von der Verstellposition keine überstehenden Teile mehr hat. Dies ist optimal für Bauraum und gegen Knieaufprallverletzungen bei einem Unfall.
2. Die Verstellmechanik bewegt sich mit der Bewegung des Lenksäulenzusammenbaues.
3. Beispielsweise ein heute üblicher gerader Klemm- oder Spannbolzen wird derart um das Lenkgehäuse herum geführt bzw. abgekröpft, so dass die Verstellmechanik ohne oben oder unten überzustehen seitlich vom Lenksäulenzusammenbau zu liegen kommt.
4. Schwenkarme sind an einer Basisplatte angelenkt, die mit der Karosse verbunden ist. Am anderen Ende enden die Schwenkarme als Klemmplatte um den Verspannbolzen oder allgemein die Eingriffseinrichtungen. An diesem Schwenkarm/diesen Schwenkarmen wird der Lenksäulenzusammenbau kreissegmentförmig auf- und abgeschwenkt.
5. Zur Längsverstellung des Lenkzusammenbaues sind beispielsweise Verstellplatten mit Längsschlitzen zur Bildung einer Schlitzführung an dem Lenkzusammenbau angebracht. Erfindungsgemäß ist die spezifische Form und Anbringung der Schlitzführung derart, dass jede Lage der Verstellung möglich ist - vor allem die obere (s. Abbildungen).
6. Um diese Anordnung noch weiter schwingungsfrei zu stabilisieren, sind Führungs- oder Stützarme von Vorteil, die am anderen Ende der Basisplatte angelenkt sind (s. Zeichnung). Sie schwenken mit dem Lenkungszusammenbau auf und ab und sind ebenso wie die Schwenkarme oder -hebel am anderen Ende an dem Klemmbolzen gelagert. Da die Stütz- oder Führungshebel den Schwenkhebeln folgen müssen, benötigen beispielsweise sie z.B. einen Schlitz als Längenausgleich an wenigstens einem Ende.
7. Z.B. wie heute bei den in der Praxis an der Basisplatte üblichen festen Verstellplatten mit senkrechten Schlitzen und den am Lenkgehäuse angebrachten Platten mit waagerechten Schlitzen sind auch bei der vorliegenden Erfindung vorzugsweise abwechselnd Klemmplatten, Schwenkhebel und Führungshebel zu Paketen geschachtelt. Damit können auf besonders einfach Weise die notwendigen Haltekräfte bei einem Unfall erreicht und eine schwingungsfreie Konstruktion erhalten werden.
8. Die Fig. 13 zeigt eine bei dieser Konstruktion zur Gewichtsentlastung einsetzbare Wikkelfeder, die bei der gezeigten Anordnung keinen zusätzlichen Raum benötigt.
9. Der abgekröpfte Bolzen kann zum Verspannen eine Schwenkbewegung durchführen, um die heute an beiden Seiten üblichen Verklemmechaniken (Nocken oder Gewinde) zu bewegen

Die einzelnen Ausgestaltungen der vorliegenden Erfindung haben bedingt durch spezifische Merkmalskombinationen insbesondere die nachfolgenden Gestaltungen und/oder Vorteile.

Durch die Erfindung wird insbesondere eine Lenksäulenanordnung mit einer Lenksäulenverstellmechanik geschaffen, die sich seitlich neben der Lenksäule befindet und weder oben noch unten räumlich übersteht, und zwar in keiner Verstellposition. Vorzugsweise gilt dies für alle Positionen der Lenksäule. Zusätzlich nimmt die Mechanik bevorzugt so wenig Raum ein, dass auch noch Platz für ein Aufprallpolster vorhanden ist.

Gemäß der Erfindung bewegt sich die Verstellmechanik mit dem Lenksäulengehäuse. Außerdem gibt es noch Lösungen, den Bolzen zum Verklemmen Platz sparend auszuführen. Gleiches gilt für eine Gewichtsausgleichsfeder, die oft noch eigenen Raum benötigt. Bei der Mechanik zur Verstellung der Lenkung sind somit insbesondere crashkritische bzw. überstehende Teile nach unten in Richtung auf die Knie eines Fahrers zu vermieden. Weiterhin können auch bei der Mechanik überstehende Teile nach oben in Richtung auf die Instrumente vermieden werden. Vorzugsweise befindet sich die Mechanik einseitig oder insbesondere beidseitig seitlich neben der Lenksäule.

Wesentlich für diese Gestaltungen und Vorteile ist, dass für eine Aufwärts-/Abwärtsbewegung der Lenkung schwenkbar ausgeführte Schwenkarme oder -hebel vorgesehen sind. Diese Schwenkarme oder -hebel sind derart ausgeführt, dass sie mit Klemmplatten, die ohnehin für die Fixierung der Längsverstelleinrichtungen in jeder Position der Lenkungsverstellung eine funktionsgerechte Überdeckung haben und zur Fixierung ebenfalls mitgeklemmt werden. Dabei kann zusätzlich ein Klemmstück vorgesehen und derart ausgeführt sein, dass es eine ausreichende Überdeckung und damit Klemmung der Klemmplatten und Schwenkhebel erreicht. Dieses Klemmstück kann in einem leichten Bogen von vorzugsweise wenigen hundertstel Millimetern derart ausgeführt sein, dass es an den jeweiligen Enden die größte Klemmkraft erreicht.

Ein Aspekt von erfinderischer Bedeutung besteht darin, dass ein Klemmbolzen in der Form derart um die Lenksäulenanordnung geführt ist, dass er kaum mehr Raum benötigt als seine vertikale Dickendimension. Dazu kann der Klemmbolzen derart geformt sein, dass die Kleemmmechanik über die Dickendimension des Klemmbolzens hinaus keine oder kaum zusätzlichen Raum benötigt, allenfalls für ein Verschwenken des Klemmbolzens zwecks Betätigung der Klemmeinrichtungen. Damit, dass der Klemmbolzen zum Öffnen und Verspannen der Lenkungsverstellung derart drehbar und damit schwenkbar ist, kann erreicht werden, dass noch weiter möglichst geringer Raumbedarf besteht. Der abgekröpfte Bolzen führt dann zum Verspannen eine Schwenkbewegung durch und bewegt dabei insbesondere die an beiden Seiten vorgesehenen Verklemmmechaniken beispielsweise mittels Nocken oder Gewinde. Bevorzugt ist es ferner, wenn der Klemmbolzen eine abgerundete Form hat.

Die erfindungsgemäße Lenkung oder Lenksäulenanordnung mit einer Sicherheitseinrichtung für ein Fahrzeug ist derart, dass eine Lenksäulenhöhen- und -längsverstellmechanik in kompakter Bauweise enthalten ist, die unabhängig von der Verstellposition keine überstehenden Teile mehr hat, was optimal für Bauraum und Knieaufprallverletzungen bei einem Unfall ist. Die dabei verwendeten Schwenkarme der Höheneinstelleinrichtungen sind vorzugsweise an einer Basisplatte angelenkt, die mit der Karosse des Fahrzeuges verbunden ist. Zur Vereinfachung der Klemmeinrichtungen kann dabei ferner vorgesehen sein, dass die Führungsarme am anderen Ende als Klemmplatte um den Verspannbolzen enden. Damit kann der Lenksäulenzusammenbau kreissegmentförmig an diesem Schwenkarm/diesen Schwenkarmen auf- und abgeschwenkt werden.

Auch können bei der Lenksäulenanordnung nach der vorliegenden Erfindung zur Längsverstellung des Lenkzusammenbaues Verstellplatten mit Längsschlitzen an dem Lenkzusammenbau angebracht sein. Dabei kann die Form und Anbringung der Verstellplatten derart sein, dass jede Lage der Verstellung, insbesondere eine obere, möglich ist. In Ergänzung ist es vorteilhaft, weil stabilisierend, wenn Führungsarme oder -hebel vorgesehen sind, die bezüglich der Schwenkarme am anderen Ende der Basisplatte angelenkt sind. Diese Führungsarme oder -hebel können mit dem Lenkungszusammenbau aufwärts und abwärts schwenken und/oder ebenso wie die Schwenkarme oder -hebel in der Mitte des Klemmbolzens am anderen Ende gelagert sein. Im Einstellbetrieb der Position der Lenksäulenanordnung werden die Führungsarme oder -hebel den Schwenkarme oder -hebeln folgen und vorzugsweise einen Schlitz als Längenausgleich an einem Ende oder jeweils an beiden Enden aufweisen. Vorzugsweise sind die Klemmplatten oder auch Längsverstellplatten, Schwenkarme und Führungsarme insbesondere paketweise geschachtelt.

Schließlich kann noch eine Wickelfedergewichtsentlastung vorgesehen sein, die insbesondere keinen zusätzlichen oder gesonderten Raum benötigt.

Mit der vorliegenden Erfindung wird insbesondere der Vorteil einer dimensionsoptimierten Lenkungspositionsverstellung erreicht. Der Raumbedarf nach oben in Richtung auf die Instrumente zu ist nicht mehr als die Dicke des Bolzens oder Klemmbolzens 7. Klemmleisten in Form der Schwenkhebel 4 und der Klemmplatten 15 befinden sich in jeder Position seitlich von der Lenkung. Sie bewegen sich mit der Lenksäulenanordnung 1. Hierdurch ist mehr Raum für die Knie eines Fahrers. Es ist keine kniezerstörende Mechanik bei einem Crash vorhanden. Weiter reicht der durch die Erfindung erhaltene Raum zur Anbringung zusätzlicher Aufschlagpolster 11 zum Schutz der Knie bei einem Crash. Damit können auch zukünftig eventuell gesetzliche Sicherheitsforderungen bei Crashs erfüllt werden.

Zusammenfassend wird mit der vorliegenden Erfindung eine Lenksäulenanordnung mit einer Sicherheitseinrichtung und mit einer Längs- und Höhenverstellmechanik einer Lenksäule oder Lenksäulenanordnung geschaffen, welche Sicherheitseinrichtung derart gestaltet ist und mit der Bewegung mitgeführt wird, dass sie kaum zusätzlichen Raum in der Höhendimension benötigt. Insbesondere schwenkt dabei der Klemmbolzen oder allgemein die Eingriffseinrichtung bei Betätigung und bewegen sich die Schwenkhebel für die Höhenverstellung mit der Lenksäulenanordnung nach oben und unten.

## Patentansprüche

1. Lenksäulenanordnung (1) mit Längsverstelleinrichtungen (9) und Höhenverstelleinrichtungen (6) dafür,
wobei die Längsverstelleinrichtungen (9) eine Schlitzführung (17), die linear in der Längsrichtung der Lenksäulenanordnung (1) verläuft, und darin geführte Eingriffseinrichtungen (8) enthält,
wobei die Höhenverstelleinrichtungen (6) Schwenkeinrichtungen (5) enthalten, die an den Eingriffseinrichtungen (8) der Längsverstelleinrichtungen (9) angreifen, und
wobei die Schlitzführung (17) beiderseits der Lenksäulenanordnung (1) linear in der Längsrichtung der letzteren verlaufende Führungsschlitze (16) enthält, und die darin geführten Eingriffseinrichtungen (8) durch ein nur auf einer Seite der Lenksäulenanordnung (1) liegendes Eingriffsteil (7) gebildet sind
**dadurch gekennzeichnet,**
**dass** das Eingriffsteil (7) einen an die Außenkontur der Lenksäulenanordnung (1) angepassten Mittenabschnitt (23) und Eingriffsenden (22a, 22b) aufweist, die neben der Lenksäulenanordnung (1) liegen.

2. Lenksäulenanordnung (1) nach Anspruch 1, **dadurch gekennzeichnet, dass** die Schwenkeinrichtungen (5) wenigstens einen Schwenkhebel (4) enthalten, der mit einem Ende an den Eingriffseinrichtungen (8) der Längsverstelleinrichtungen (9) angreift und mit seinem anderen Ende am Fahrzeug, insbesondere einer Basisplatte (2), die mit dem Fahrzeug verbunden ist, schwenkbar angelenkt ist.

3. Lenksäulenanordnung (1) nach Anspruch 1 oder 2, **dadurch gekennzeichnet, dass** die Schwenkeinrichtungen (5) eine Stabilisierung enthalten.

4. Lenksäulenanordnung (1) nach Anspruch 3, **dadurch gekennzeichnet, dass** die Stabilisierung wenigstens einen Führungshebel (26) aufweist, der mit einem Ende an den Eingriffseinrichtungen (8) der Längsverstelleinrichtungen (9) angreift und mit seinem anderen Ende am Fahrzeug, insbesondere einer Basisplatte (2), die mit dem Fahrzeug verbunden ist, schwenkbar angelenkt ist, und dass jeder Führungshebel (26) und/oder ggf. jeder Schwenkhebel (4) einen Längenausgleich (20) enthält.

5. Lenksäulenanordnung (1) nach einem der vorhergehenden Ansprüche, **dadurch gekennzeichnet, dass** zum Fixieren einer Einstellposition der Lenksäulenanordnung (1) Klemmeinrichtungen (14) vorgesehen sind, die an den Eingriffseinrichtungen (8) der Längsverstelleinrichtungen (9) angreifen.

6. Lenksäulenanordnung (1) nach Anspruch 5, **dadurch gekennzeichnet, dass** die Klemmeinrichtungen (14) eine Mehrzahl von Klemmplatten (15) enthalten, die über die Eingriffseinrichtungen (8) der Längsverstelleinrichtungen (9) betätigbar sind.

7. Lenksäulenanordnung (1) nach den Ansprüchen 2 und 6 oder 2, 4 und 6, **dadurch gekennzeichnet, dass** jeweils eine Mehrzahl von Schwenkhebeln (4) und/oder eine Mehrzahl von Führungshebeln (26) vorgesehen sind/ist, und dass zwischen den Klemmplatten (15) Schwenkhebel (4) und ggf. Führungshebel (26) mit ihren entsprechenden Enden aufgenommen sind, so dass bei einem Verklemmen einer Einstellposition der Lenksäulenanordnung (1) mittels der Klemmplatten (15) über die Eingriffseinrichtungen (8) der Längsverstelleinrichtungen (9) sowohl letztere als auch die Schwenkhebel (4) und ggf. Führungshebel (26) und somit die Höhenverstelleinrichtungen (6) fixiert werden.

8. Lenksäulenanordnung (1) nach einem der Ansprüche 5 bis 7, **dadurch gekennzeichnet, dass** die Klemmeinrichtungen (14) Halteeinrichtungen enthalten, die bezüglich der Eingriffseinrichtungen (8) zum Betätigen der Klemmeinrichtungen (14) betätigbar sind.

9. Lenksäulenanordnung (1) nach Anspruch 8, **dadurch gekennzeichnet, dass** die Halteeinrichtungen Schrauben, Schraubgewinde, Muttern, Hebel und/oder Nocken enthalten.

10. Lenksäulenanordnung (1) nach einem der Ansprüche 5 bis 9, **dadurch gekennzeichnet, dass** die Klemmeinrichtungen (14) eine Mehrzahl von Klemmplatten (15) und wenigstens ein diesen zugeordnetes Klemmstück (24) enthalten, das derart ausgeführt ist, dass es zum Erzielen einer Klemmwirkung eine Überdeckung mit den Klemmplatten (15) sowie ggf. Schwenkhebeln (4) und/oder Führungshebeln (26) hat.

11. Lenksäulenanordnung (1) nach Anspruch 10, **dadurch gekennzeichnet, dass** das Klemmstück (24) in einem leichten Bogen von vorzugsweise wenigen hundertstel Millimetern derart ausgeführt ist, dass damit an Enden oder Endbereichen die größte Klemmkraft ausübbar ist.

12. Lenksäulenanordnung (1) nach einem der vorhergehenden Ansprüche, **dadurch gekennzeichnet, dass** die Eingriffseinrichtungen (8) bezüglich der Lage der Lenksäulenanordnung (1) in dem Fahrzeug nicht über die Lenksäulenanordnung (1) nach unten vorstehen und insbesondere oberhalb der Lenksäulenanordnung (1) um diese herum geführt sind.

13. Lenksäulenanordnung (1) nach Anspruch 12 **dadurch gekennzeichnet, dass** die Eingriffseinrichtungen (8) maximal um die obere Hälfte der Lenksäulenanordnung (1) herum geführt sind.

14. Lenksäulenanordnung (1) nach Anspruch 12 oder 13 in Verbindung mit einem der Ansprüche 5 bis 11, **dadurch gekennzeichnet, dass** die Eingriffseinrichtungen (8) zum Betätigen der Klemmeinrichtungen (14) schwenkbar sind.

15. Lenksäulenanordnung (1) nach Anspruch 14 **dadurch gekennzeichnet, dass** die Eingriffseinrichtungen (8) maximal um ca. 60 °, insbesondere um ca. 45 ° und vorzugsweise um ca. 30 °, besonders bevorzugt um ca. die Hälfte jeder vorstehenden Angabe aus einer Mittelstellung in beide Richtungen, verschwenkbar sind.

16. Lenksäulenanordnung (1) nach einem der vorhergehenden Ansprüche, **dadurch gekennzeichnet, dass** das Eingriffsteil durch einen Bolzen (7) gebildet ist, der Abkröpfungen enthält, mittels denen er um die Lenksäulenanordnung (1) herum geführt ist.

17. Lenksäulenanordnung (1) nach Anspruch 16, **dadurch gekennzeichnet, dass** der Bolzen (7) einen kreisartigen Querschnitt hat.

18. Lenksäulenanordnung (1) nach einem der vorhergehenden Ansprüche, **dadurch gekennzeichnet, dass** sich die Längsverstelleinrichtungen (9) bei einer Höhenverstellung der Lenksäulenanordnung (1) mitbewegen.

19. Lenksäulenanordnung (1) nach einem der vorhergehenden Ansprüche, **dadurch gekennzeichnet, dass** sich die Längsverstelleinrichtungen (9) und Höhenverstelleinrichtungen (6) einseitig oder insbesondere beidseitig seitlich neben der Lenksäulenanordnung (1) befinden.

20. Lenksäulenanordnung (1) nach einem der vorhergehenden Ansprüche, **dadurch gekennzeichnet, dass** die Schlitzführung (17) der Längsverstelleinrichtungen (9) wenigstens einen Führungsschlitz (16) aufweist, der in einer Verstellplatte ausgebildet ist.

21. Lenksäulenanordnung (1) nach einem der vorhergehenden Ansprüche, **dadurch gekennzeichnet, dass** Gewichtsentlastungseinrichtungen (30) so angeordnet sind, dass das Gewicht der Lenksäulenanordnung (1) zumindest teilweise kompensiert wird.

22. Lenksäulenanordnung (1) nach Anspruch 21, **dadurch gekennzeichnet, dass** die Gewichtsentlastungseinrichtungen (30) eine Wickelfeder (31) enthalten, die zwischen dem Fahrzeug und der Lenksäulenanordnung (1) wirkt.

23. Lenksäulenanordnung (1) nach Anspruch 22, **dadurch gekennzeichnet, dass** die Wickelfeder (31) an einerseits den Schwenkeinrichtungen (5) und andererseits einer Basisplatte (2) wirksam angeordnet ist, an der die Schwenkeinrichtungen (5) angreifen.

## Claims

1. A steering column assembly (1), having length adjustment means (9) and height adjustment means (6) therefore,
wherein the length adjustment means (9) comprise a slotted guide (17) extending linearly in the longitudinal direction of the steering column assembly (1), and engagement means (8) guided therein,
wherein the height adjustment means (6) comprise pivot means (5), which engage at the engagement means (8) of the length adjustment means (9); and
wherein the slotted guide (17) comprises guide slots (16) linearly extending on both sides of the steering column assembly (1) in the longitudinal direction of the latter, and the engagement means (8) guided therein are formed by an engagement part (7) disposed only on one side of the steering column assembly (1),
**characterized**
**in that** the engagement part (7) has a center section (23) adapted to the outer contour of the steering column assembly (1), and engagement ends (22a, 22b) lying besides the steering column assembly (1).

2. A steering column assembly (1) according to claim 1, **characterized in that** the pivot means (5) comprise at least one pivot lever (4), which engages the engagement means (8) of the length adjustment means (9) with one end, and which is pivotably hinged with its other end at the vehicle, in particular at a base plate (2), which is connected to the vehicle.

3. A steering column assembly (1) according to claim 1 or 2, **characterized in that** the pivot means (5) include a stabilization.

4. A steering column assembly (1) according to claim 3, **characterized in that** the stabilization comprises at least one guide lever (26), which engages at the engagement means (8) of the length adjustment means (9) with one end and which is pivotably hinged with its other end at the vehicle, in particular at a base plate (2), which is connected to the vehicle, and **in that** each guide lever (26) and/or each pivot lever (4) comprises a length compensation (20).

5. A steering column assembly (1) according to any of the preceding claims, **characterized in that** for fixating an adjustment position of the steering column assembly (1) clamping means (14) are provided, which engage at the engagement means (8) of the length adjustment means (9).

6. A steering column assembly (1) according to claim 5, **characterized in that** the clamping means (14) comprise a plurality of clamping plates (15), which can be actuated via the engagement means (8) of the length adjustment means (9).

7. A steering column assembly (1) according to claims 2 and 6 or 2, 4 and 6, **characterized in that** a plurality of pivot levers (4) and/or a plurality of guide levers (26) is provided, respectively, and **in that** pivot levers (4) and given the case guide levers (26) are received with their respective ends between the clamping plates (15), so that with a clamping of an adjustment position of the steering column assembly (1) by means of the clamping plates (15) through the engagement means (8) of the length adjustment means (9) both the latter and the pivot levers (4) as well as given the case guide levers (26) and thus the height adjustment means (6) are fixated.

8. A steering column assembly (1) according to any of claims 5 through 7, **characterized in that** the clamping means (14) comprise holder means, which can be actuated for actuating the clamping means (14) with respect to the engagement means (8).

9. A steering column assembly (1) according to claim 8, **characterized in that** the holder means include screws, screw threads, nuts, levers and/or cams.

10. A steering column assembly (1) according to any of claims 5 through 9, **characterized in that** the clamping means (14) comprise a plurality of clamping plates (15) and at least one clamping piece (24) associated therewith, which is configured so that it comprises an overlap with the clamping plates (15) as well as given the case with the pivot levers (4) and/or the guide levers (26) in order to achieve a clamping effect.

11. A steering column assembly (1) according to claim 10, **characterized in that** the clamping piece (24) is configured in a slight arc of preferably a few hundredths of a millimeter, so that the greatest clamping force can thus be imparted at the ends or at the end portions.

12. A steering column assembly (1) according to any of the preceding claims, **characterized in that** the engagement means (8) do not protrude downward beyond the steering column assembly (1) with respect to the position of the steering column assembly (1) in the vehicle and are in particular run around the steering column assembly (1) above the latter.

13. A steering column assembly (1) according to claim 12, **characterized in that** the engagement means (8) are run around the upper half of the steering column assembly (1) at maximum.

14. A steering column assembly (1) according to claim 12 or 13 in combination with any of claims 5 through 11, **characterized in that** the engagement means (8) are pivotable for actuating the clamping means (14).

15. A steering column assembly (1) according to claim 14, **characterized in that** the engagement means (8) are pivotable at maximum by approximately 60°, in particular by approximately 45°, and preferably by approximately 30°, in a particularly preferred manner by approximately half of each of the preceding values from a center position in both directions.

16. A steering column assembly (1) according to any of the preceding claims, **characterized in that** the engagement part is formed by a bolt (7), which includes offsets, by means of which it is run around the steering column assembly (1).

17. A steering column assembly (1) according to claim 16, **characterized in that** the bolt (7) has a circular cross section.

18. A steering column assembly (1) according to any of the preceding claims, **characterized in that** the length adjustment means (9) move together with a height adjustment of the steering column assembly (1).

19. A steering column assembly (1) according to any of the preceding claims, **characterized in that** the length adjustment means (9) and the height adjustment means (6) are disposed on one side, or in particular on both sides laterally besides the steering column assembly (1).

20. A steering column assembly (1) according to one the preceding claims, **characterized in that** the slotted guide (17) of the length adjustment means (9) has at least one guide slot (16), which is configured in an adjustment plate.

21. A steering column assembly (1) according to any of the preceding claims, **characterized in that** weight relief means (30) are configured, so that the weight of the steering column assembly (1) is at least partially compensated.

22. A steering column assembly (1) according to claim 21, **characterized in that** the weight relief means (30) comprise a coil spring (31), which is effective between the vehicle and the steering column assembly (1).

23. A steering column assembly (1) according to claim 22, **characterized in that** the coil spring (31) is effectively arranged on the one hand at the pivot means (5), and on the other hand at a base plate (2), at which the pivot means (5) engage.

## Revendications

1. Agencement de colonne de direction (1), comportant des dispositifs de réglage en longueur (9) et des dispositifs de réglage en hauteur (6) pour celui-ci,
les dispositifs de réglage en longueur (9) contenant un guidage à fente (17), qui s'étend de façon linéaire dans la direction longitudinale de l'agencement de colonne de direction (1), et des dispositifs d'engagement (8) guidés dans celui-ci,
les dispositifs de réglage en hauteur (6) contenant des dispositifs de pivotement (5) qui attaquent les dispositifs d'engagement (8) des dispositifs de réglage en longueur (9), et
le guidage à fente (17) contenant de chaque côté de l'agencement de colonne de direction (1) des fentes de guidage (16) s'étendant linéairement dans la direction longitudinale de celui-ci, et les dispositifs d'engagement (8) guidés dans celles-ci étant formés par une pièce d'engagement (7) située seulement sur un côté de l'agencement de colonne de direction (1),
**caractérisé en ce que**
la pièce d'engagement (7) présente un tronçon central (23) adapté au contour extérieur de l'agencement de colonne de direction (1) et des extrémités d'engagement (22a, 22b) qui sont situées à côté de l'agencement de colonne de direction (1).

2. Agencement de colonne de direction (1) selon la revendication 1, **caractérisé en ce que** les dispositifs de pivotement (5) contiennent au moins un levier pivotant (4) qui attaquent par une extrémité les dispositifs d'engagement (8) des dispositifs de réglage en longueur (9) et qui, par son autre extrémité, est articulé de manière pivotante sur le véhicule, en particulier sur une plaque de base (2) qui est reliée au véhicule.

3. Agencement de colonne de direction (1) selon la revendication 1 ou 2, **caractérisé en ce que** les dispositifs de pivotement (5) contiennent une stabilisation.

4. Agencement de colonne de direction (1) selon la revendication 3, **caractérisé en ce que** la stabilisation présente au moins un levier de guidage (26) qui attaque par une extrémité les dispositifs d'engagement (8) des dispositifs de réglage en longueur (9) et qui, par son autre extrémité, est articulé de manière pivotante sur le véhicule, en particulier sur une plaque de base (2) qui est reliée au véhicule, et **en ce que** chaque levier de guidage (26) et/ou, le cas échéant, chaque levier pivotant (4) contient une compensation de longueur (20).

5. Agencement de colonne de direction (1) selon l'une quelconque des revendications précédentes, **caractérisé en ce que** pour fixer une position de réglage de l'agencement de colonne de direction (1), il est prévu des dispositifs de serrage (14) qui attaquent les dispositifs d'engagement (8) des dispositifs de réglage en longueur (9).

6. Agencement de colonne de direction (1) selon la revendication 5, **caractérisé en ce que** les dispositifs de serrage (14) contiennent une multitude de plaques de serrage (15) qui peuvent être actionnées via les dispositifs d'engagement (8) des dispositifs de réglage en longueur (9).

7. Agencement de colonne de direction (1) selon les revendications 2 et 6 ou 2, 4 et 6, **caractérisé en ce qu'**il est prévu une multitude de leviers pivotants (4) et/ou une multitude de leviers de guidage (26), respectivement, et **en ce qu'**entre les plaques de serrage (16), des leviers pivotants (4) et, le cas échéant, des leviers de guidage (26) sont reçus avec leurs extrémités correspondantes, de telle sorte qu'en cas de serrage d'une position de réglage de l'agencement de colonne de direction (1) au moyen des plaques de serrage (16) via les dispositifs d'engagement (8) des dispositifs de réglage en longueur (9), tant ces derniers que les leviers pivotants (4) et, le cas échéant, les leviers de guidage (26) et ainsi les dispositifs de réglage en hauteur (6) sont fixés.

8. Agencement de colonne de direction (1) selon l'une des revendications 5 à 7, **caractérisé en ce que** les dispositifs de serrage (14) contiennent des dispositifs de retenue qui peuvent être actionnés vis-à-vis des dispositifs d'engagement (8) pour actionner les dispositifs de serrage (14).

9. Agencement de colonne de direction (1) selon la revendication 8, **caractérisé en ce que** les dispositifs de retenue contiennent des vis, des pas de vis, des écrous, des leviers et/ou des cames.

10. Agencement de colonne de direction (1) selon l'une des revendications 5 à 9, **caractérisé en ce que** les dispositifs de serrage (14) contiennent une multitude de plaques de serrage (15) et au moins une pièce de serrage (24) associée à celles-ci, qui est réalisée de telle sorte que pour atteindre un effet de serrage, elle présente un recouvrement avec les plaques de serrage (15) ainsi que, le cas échéant, avec les leviers pivotants (4) et/ou les leviers de guidage (26).

11. Agencement de colonne de direction (1) selon la revendication 10, **caractérisé en ce que** la pièce de serrage (24) est réalisée en un léger arc de préférence de quelques centièmes de millimètres, de telle sorte que la plus grande force de serrage peut être exercée aux extrémités ou dans les zones d'extrémité.

12. Agencement de colonne de direction (1) selon l'une quelconque des revendications précédentes, **caractérisé en ce que** par rapport à la position de l'agencement de colonne de direction (1) dans le véhicule, les dispositifs d'engagement (8) ne font pas saillie vers le bas au-delà de l'agencement de colonne de direction (1) et sont en particulier guidés au-dessus de l'agencement de colonne de direction (1) autour de celui-ci.

13. Agencement de colonne de direction (1) selon la revendication 12, **caractérisé en ce que** les dispositifs d'engagement (8) sont guidés au maximum autour de la moitié supérieure de l'agencement de colonne de direction (1).

14. Agencement de colonne de direction (1) selon la revendication 12 ou 13, en liaison avec l'une des revendications 5 à 11, **caractérisé en ce que** les dispositifs d'engagement (8) peuvent pivoter pour actionner les dispositifs de serrage (14).

15. Agencement de colonne de direction (1) selon la revendication 14, **caractérisé en ce que** les dispositifs d'engagement (8) sont pivotables au maximum d'environ 60°, en particulier d'environ 45° et de préférence d'environ 30°, de manière particulièrement préférée d'environ la moitié de chaque valeur ci-dessus depuis une position médiane dans les deux directions.

16. Agencement de colonne de direction (1) selon l'une quelconque des revendications précédentes, **caractérisé en ce que** la pièce d'engagement est formée par un boulon (7) qui contient des parties coudées au moyen desquelles il est guidé autour de l'agencement de colonne de direction (1).

17. Agencement de colonne de direction (1) selon la revendication 16, **caractérisé en ce que** le boulon (7) a une section transversale circulaire.

18. Agencement de colonne de direction (1) selon l'une quelconque des revendications précédentes, **caractérisé en ce que** lors d'un réglage en hauteur de l'agencement de colonne de direction (1), les dispositifs de réglage en longueur (9) se déplacent conjointement.

19. Agencement de colonne de direction (1) selon l'une quelconque des revendications précédentes, **caractérisé en ce que** les dispositifs de réglage en longueur (9) et les dispositifs de réglage en hauteur (6) se trouvent latéralement à côté de l'agencement de colonne de direction (1), sur un côté ou en particulier sur deux côtés.

20. Agencement de colonne de direction (1) selon l'une quelconque des revendications précédentes, **caractérisé en ce que** le guidage à fente (17) des dispositifs de réglage en longueur (9) présente au moins une fente de guidage (16) qui est réalisée dans une plaque de réglage.

21. Agencement de colonne de direction (1) selon l'une quelconque des revendications précédentes, **caractérisé en ce que** des dispositifs de décharge de poids (30) sont agencés de telle sorte que le poids de l'agencement de colonne de direction (1) est compensé au moins partiellement.

22. Agencement de colonne de direction (1) selon la revendication 21, **caractérisé en ce que** les dispositifs de décharge de poids (30) contiennent un ressort spiral (31) qui agit entre le véhicule et l'agencement de colonne de direction (1).

23. Agencement de colonne de direction (1) selon la revendication 22, **caractérisé en ce que** le ressort spiral (31) est agencé de manière opérative d'une part sur les dispositifs de pivotement (5) et d'autre part sur une plaque de base (2) qui est attaquée par les dispositifs de pivotement (5).
